# EUROPEAN PATENT SPECIFICATION

(11) **EP 1 777 483 B1**
(45) Date of publication and mention of the grant of the patent: **06.07.2011**
(21) Application number: 06021233.9
(22) Date of filing: 10.10.2006
(51) Int. Cl.: G01B 5/012, G01B 7/012, G01B 11/00

(54) **Probe observing device**
Taststiftbeobachtungsgerät
Dispositif pour observer un palpeur

(30) Priority: 19.10.2005 JP 2005304338
(43) Date of publication of application: 25.04.2007
(73) Proprietor: Mitutoyo Corporation, Kawasaki-shi Kanagawa-ken 213-8533 (JP)
(72) Inventor: Arai, Masanori, Kawasaki-shi, Kanagawa 213-8533 (JP)
(74) Representative: Lang, Johannes

(56) References cited:
- DE-A1- 4 143 193
- DE-A1- 4 327 250
- US-A- 5 125 035
- US-A- 5 825 666

## Description

### BACKGROUND OF THE INVENTION

### 1. FIELD OF THE INVENTION

The present invention relates to a probe observing device and a surface texture measuring device. The present invention relates to, for example, a probe observing device for observing a probe used in measuring a surface texture of an object to be measured by using a monitor or the like.

### 2. DESCRIPTION OF RELATED ART

There has been known a surface texture measuring device for measuring a surface texture or a three-dimensional profile of an object to be measured by scanning the object surface to be measured. Examples of such the surface texture measuring device include a roughness measuring machine, a counter measuring machine, a roundness measuring machine, and a coordinate measuring machine. The surface texture measuring device employs a probe for detecting the object surface to be measured. In recent years, in response to an increasing demand for an extremely high measuring accuracy along with the use of a more precise object to be measured, a precision structure has been adopted for the probe. Therefore, it has become difficult to visually observe a probe with a naked eye. Under the circumstance, there has been proposed a method of observing a probe by magnifying the probe by a magnifier or the like to thereby position the probe on a measuring point (refer to, for example, JP 07-505958 A).

US-A-5 825 666 discloses an optical touch probe with a first target at the distal end thereof on the contact element in a standard probe. The probe is mounted to a video camera of an optical coordinate measuring machine to image the target on the camera. Movement and position of the target in the X and Y coordinates is indicated by the machine's computer image processing system. A second target is mounted to the proximal end of the probe and indicates movement and position in the Z coordinate.

DE 41 43 193 A1 discloses a television camera, which is mounted in a measurement machine so as to have complete freedom for positioning of the camera within the measurement volume of the machine, thereby replacing the taking of manual points and definition of the trajectories of the traditional measurement systems utilising feelers with a simple imaging of the surface portion to be measured. The system comprises an image processor which controls the capture of two different images of the surface to locate the lines of strong contrast. A stereo processor then provides for correlation between the points of the two images, calculation of the three-dimensional coordinates of these points and of the equations of the curves and the surfaces passing through these points.

US-A-5 125 035 discloses a system for automatically inspecting the true position of cooling holes manufactured in hot section turbine blades and vanes. The system includes a computer controlled rotary tilt table for correctly positioning the blade or vane having the cooling holes, and computer controlled, a coordinate measuring machine for positioning a video camera in the X, Y, Z directions so that it can look straight into the selected cooling hole of the blade or vane. An image analyzer receives the image from the video camera, calculates the centroid of the image, and the host computer calculates and reports deviation between the actual or true position of the cooling hole and data relating to the correct position of the same.

JP 07-505958 A discloses, for example, a measuring device including: a probe for detecting a surface of the object to be measured; a video camera for taking an image of the probe; and a monitor for displaying the image taken by the video camera. At least one of the probe and the video camera is provided so as to be capable of rotating or pivoting, thereby making it possible to adjust the probe and the video camera such that the probe enters an image-taking range of the video camera. With this configuration, the probe is adjusted such that the measuring point and the probe both enter the view field of the video camera simultaneously, and a user brings the probe to the measuring point with reference to the image displayed on the monitor.

In this method, in a case where the precision probe is adopted, the video camera must be equipped with a high-magnification magnifier in order to observe the probe at a sufficient magnification.

In this case, however, the view field of the video camera narrows as the magnification of the magnifier increases, making it difficult to adjust the probe to enter the view field of the video camera. Accordingly, there arises a problem in that it is also time-consuming to adjust the probe and the camera such that the probe enters the view field of the camera, which reduces measuring efficiency. On the other hand, adoption of a low-magnification magnifier naturally makes it easy to adjust the probe to enter the view field of the video camera, whereas the close observation of the precision probe cannot be attained with the low-magnification magnifier. Therefore, there arises another problem in that it is impossible to accurately bring the probe to the measuring point, which reduces measuring accuracy.

### SUMMARY OF THE INVENTION

The above mentioned problems are solved according to the invention by a probe observing device as defined in claim 1. Advantageous embodiments are defined in the dependent claims.

The present invention has an object to provide a probe observing device and a surface texture measuring device which are capable of observing a probe with high measuring accuracy through simple operation.

With the present invention according to claim 1, the image taking device takes an image of the probe. Then, the image processing unit processes data on the image taken by the image taking device. The image processing unit processes the image data based on the instruction inputted by the operating device or the instruction inputted from the measuring part program. The image processing includes, for example, digital zoom processing for magnifying only a part of the image. The image data thus processed is displayed on the display. The probe is observed based on the image displayed on the display. Even a precision probe, for example, may be displayed after being enlarged through processing such as digital zoom processing, which enables a user to observe the probe with clarity.

With the above configuration, data on the taken image can be processed by the image data processing unit. Accordingly, the image of the probe is clearly displayed on the display through the processing such as enlargement processing, with the result that the probe can be observed with clarity, making it possible, for example, to bring the probe to a measuring point with accuracy.

Also, the image data processing unit performs image processing so as to, for example, have an enlarged image of the probe can be displayed, which makes it possible to reduce the magnification of the lens system provided to the image taking device itself. The image taking device provided with such the low-magnification lens system has a wider view field as compared with a case of adopting a high-magnification lens system. With the wider view field, it is possible to easily bring the probe into the view field by merely directing the orientation of the lens toward the probe. Accordingly, there is no need to make a fine adjustment to the positional relationship between the probe and the image taking device such that the probe enters the view field of the image taking device. Therefore, the operation is simplified to save work in the measurement, leading to an increase in measuring efficiency.

Here, the measuring part program is configured to execute measuring operation following the predetermined measuring procedure. Based on the program, operations are executed to, for example, move the probe to a measuring point, magnify and reduce the probe, and sample the measurement data.

According to the present invention, the image taking device preferably includes a lens system for magnifying the image of the probe at a magnification of 100 times or less.

With the above configuration, the image taking device has a wider view field when provided with the lens system of a magnification of 100 times or less, which makes it easy to bring the probe into the view field by merely directing the orientation of the lens toward the probe. Accordingly, there is no need to make a fine adjustment to the positional relationship between the probe and the image taking device such that the probe enters the view field of the image taking device. Therefore, the operation is simplified to save work in the measurement, leading to an increase in measuring efficiency.

To be specific, the lens may have the magnification of 2 to 4 times, and the image processing such as digital zoom processing may be performed at a magnification of the order of 20 times, to thereby obtain a magnification of the order of 40 to 80 times in total.

According to the present invention, the probe observing device preferably includes a three-axis-orthogonal driving mechanism for driving the image taking device in the directions of three axes of an X-axis, a Y-axis, and a Z-axis, the three axes being orthogonal to one another.

With the above configuration, it is possible to move the image taking device in the directions of the X-axis, the Y-axis, and the Z-axis, by the three-axis-orthogonal driving mechanism to thereby bring the probe into the view field of the image taking device.

Here, the image taking device has a wider view field when provided with a low-magnification lens system, which makes it possible to bring the probe into the view field by roughly moving the image taking device through the three-axis-orthogonal driving mechanism. Further, the image data can be processed by the image data processing unit, and accordingly, it is not always necessary to make an adjustment to bring the probe in the center of the view field. Therefore, it is easy to make a positional adjustment through the three-axis-orthogonal driving mechanism, which simplifies the operation to save work in the measurement, leading to an increase in measuring efficiency.

According to the present invention, the image taking device is preferably provided to be fixed in position with respect to the probe such that the probe enters a view field of the image taking device.

Here, the image taking device is provided in such a manner that the positional relationship between the image taking device and the probe is fixed, which includes a case where the probe is mounted to a probe mount if the probe mount for mounting and fixing the probe is provided to the measuring device main body, and the image taking device is also mounted and fixed to the probe mount.

Also, the lens system may have a relatively low magnification of, for example, 15 times, 10 times, or 5 times.

Due to the above configuration, there is no need to make a fine adjustment to the positional relationship between the probe and the image taking device such that the probe enters the view field of the image taking device. Therefore, the operation is simplified to save work in the measurement, leading to an increase in measuring efficiency.

According to a further embodiment of the present invention, it is preferable that the operating device be capable of inputting: a region selection instruction for selecting, as a selected region, a predetermined region on a display screen of the display; and a movement instruction for moving the selected region to a predetermined position on the display screen of the display, and the image data processing unit include: a selected region recognition unit for recognizing the selected region selected based on the region selection instruction and extracting data corresponding to the selected region from the image data; and a region movement processing unit for moving the selected region to a position as instructed by the movement instruction on the display screen of the display.

With the above configuration, the image data processing unit performs the image processing, in response to an instruction inputted from the operating device, based on the instruction inputted. For example, in a case where the probe is located in the corner of the view field of the image taking device, a region selection instruction is inputted from the operating device so as to select a predetermined region including the probe as the predetermined region on the display screen. Then, the selected region recognition unit recognizes the region selected through the operating device, and extracts a part of the data corresponding to the selected region from the image data obtained by the image taking device. Further, a movement instruction is inputted from the operating device so as to move the selected region to a predetermined position, for example, to the center of the display screen. Then, the region movement processing unit moves the selected region to the position as instructed by the movement instruction. Due to the movement of the selected region, the probe is displayed in the center of the screen on the display screen of the display. The user can clearly observe the probe, which is displayed in the center of the display screen, to thereby, for example, bring the probe to a measuring point with accuracy. It is possible to select the region on the display screen to move the selected region to, for example, the center of the display screen, which eliminates the need to make an adjustment to the positional relationship between the probe and the image taking device such that the probe actually comes to the center of the view field of the image taking device. Therefore, the operation is simplified to save work in the measurement, leading to an increase in measuring efficiency.

According to a further embodiment of the present invention, it is preferable that the operating device be capable of inputting: a region selection instruction for selecting, as a selected region, a predetermined region on a display screen of the display; and an enlargement instruction for magnifying the selected region at a predetermined magnification on the display screen of the display, and the image data processing unit include: a selected region recognition unit for recognizing the selected region selected by the operating device and extracting data corresponding to the selected region from the image data; and a region enlargement processing unit for magnifying the selected region at a magnification as instructed by the enlargement instruction on the display screen of the display.

With the above configuration, the image data processing unit performs the image processing, in response to an instruction inputted from the operating device, based on the instruction inputted. For example, a region selection instruction is inputted from the operating device so as to select a predetermined region including the probe as the predetermined region on the display screen. Then, the selected region recognition unit recognizes the region selected through the operating device, and extracts a part of the data corresponding to the selected region from the image data obtained by the image taking device. Further, an enlargement instruction is inputted from the operating device so as to magnify the selected region at a predetermined magnification. Then, the region enlargement processing unit magnifies the selected region at the magnification as instructed by the enlargement instruction.

Due to the enlargement of the selected region, the enlarged probe is displayed on the display screen of the display. The user can clearly observe the enlarged probe displayed on the display screen, to thereby, for example, bring the probe to a measuring point with accuracy. It is possible to select the region to magnify the selected region on the display screen, and therefore the lens system of the image taking device itself may have a low magnification. With the low-magnification lens system, the image taking device obtains a wider view field, which makes it possible to bring the probe into the view field.

Further, with the wider view field, it is possible to bring the probe into the view field by merely fixing the orientation of the image taking device toward the probe. Therefore, there is no need to make an adjustment to the positional relationship between the probe and the image taking device, saving work in the measurement, thereby making it possible to increase measuring efficiency. It is also possible to display the entire probe and the entire object to be measured on the screen at a low magnification at first so as to cutout in stages the periphery of the measuring point for enlargement, which leads to ease of operation of bringing the probe to the measuring point.

According to an embodiment, it is possible, for example, that the coordinate of the measuring point is inputted in advance, and the measuring point is automatically enlarged when the probe comes close to the measuring point.

With such the configuration, the operation to be performed by the user is made significantly easy.

The present invention also provides a surface texture measuring device including the probe observing device and a measuring device main body having a probe.

With the above configuration, it is possible to clearly observe the probe with reference to the image of the probe displayed on the display, to thereby, for example, make it possible to bring the probe to the measuring site with accuracy. As a result, the surface texture measuring device performs measurement with a high degree of accuracy.

Also, there is no need to make an adjustment to the positional relationship between the probe and the image taking device, which simplifies the operation to save work in the measurement, thereby making it possible to increase measuring efficiency of the surface texture measuring device.

### BRIEF DESCRIPTION OF THE DRAWINGS

In the accompanying drawings:
FIG. 1 is a diagram showing an entire configuration of a surface texture measuring device;
FIG. 2 is a diagram showing a state where an image of a probe is taken by a camera;
FIG. 3 is a diagram showing a configuration of a central control unit;
FIG. 4 is a diagram showing a state where an image of a contact portion of the probe taken by the camera is displayed on a monitor;
FIG. 5 is a diagram showing a state where an image of the probe is moved to the center of a monitor screen;
FIG. 6 is a diagram showing how the image of the probe is enlarged on the monitor screen; and
FIG. 7 is a diagram showing an enlarged image of the probe displayed on the monitor screen.

### DETAILED DESCRIPTION OF THE PREFERRED EMBODIMENT

Hereinafter, an embodiment of the present invention is explained with reference to the drawings and reference numerals denoting elements in the drawings.

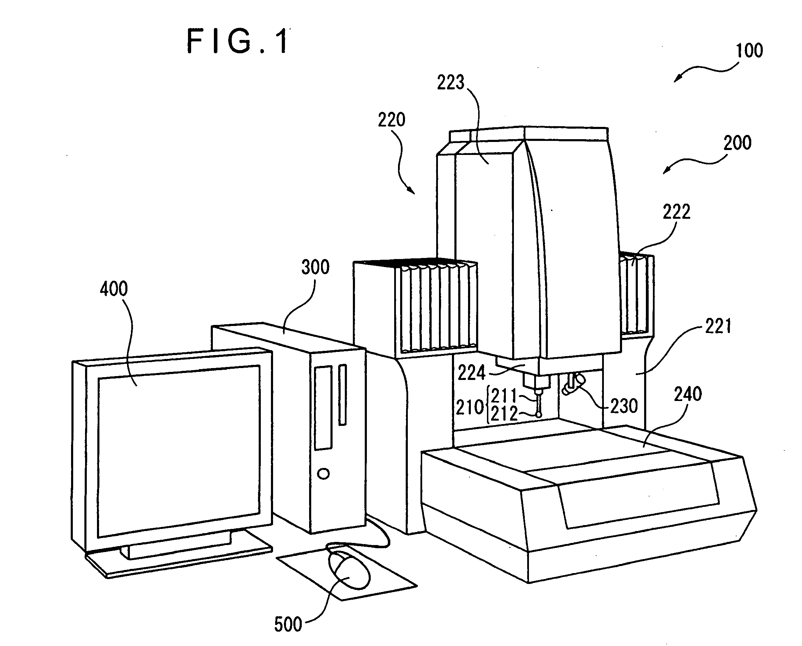

FIG. 1 is a diagram showing an entire configuration of a surface texture measuring device 100.

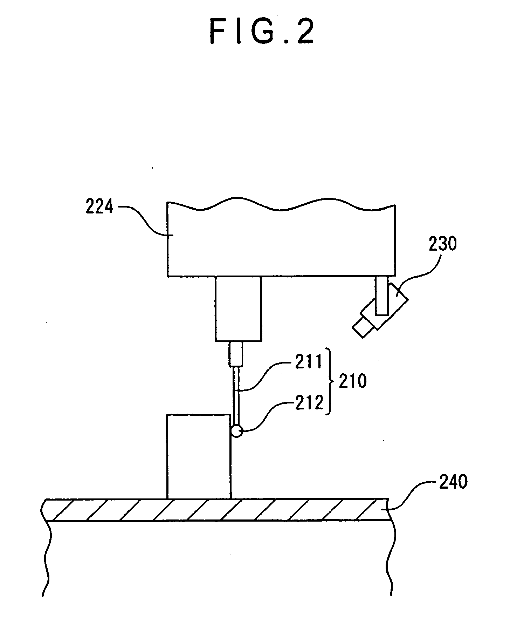

FIG. 2 is a diagram showing a state where an image of a probe 210 is taken by a camera 230.

The surface texture measuring device 100 includes: a measuring device main body 200; a central control unit 300; a monitor (i.e., display) 400; and a mouse (i.e., operating device) 500. The measuring device main body 200 includes the probe 210 capable of moving three-dimensionally and a camera (i.e., image taking device) 230 for observing the probe 210. The central control unit 300 controls operation of the measuring device 200 and processes image data on an image taken by the camera 230. The monitor 400 displays measurement data and image data. The mouse 500 is used by a user to input an operation instruction through manual operation.

The measuring device main body 200 includes: the probe 210; a coordinate driving mechanism 220 as a moving mechanism for three-dimensionally moving the probe 210 along with a surface of the object to be measured; and the camera 230 for observing the probe 210.

Examples of the probe 210 include a vibration touch probe 210 for steadily vibrating a stylus 211 with a contact portion 212 on the tip in the axial direction, and for detecting a change in vibrations of the stylus 211 on contact with the object surface to be measured by the contact portion 212. The object surface to be measured may be scanned by the vibration touch probe 210 by the contact portion 212 with the contact portion 212 of the vibration touch probe 210 staying contact with the object surface to be measured with a constant measuring force. Alternatively, the contact portion 212 of the vibration contact probe 210 may be brought into contact with the object surface to be measured and taken away from the surface to thereby perform a touch measurement.

The coordinate driving mechanism 220 adopts a slide mechanism in X, Y, and Z directions, which is used in a conventional coordinate measuring device. To be specific, the coordinate driving mechanism 220 includes: a bridge-type frame 221 provided to be capable of slide-moving back and forth (in the Y direction) with respect to a stage 240; a Z-column 223 provided to be capable of slide-moving a beam 222 of the bridge-type frame 221 from side to side (in the X direction); and a Z-spindle 224 provided to be capable of sliding vertically (in the Z direction) within the Z-column 223. Incidentally, there is also an alternative configuration in which the bridge-type frame 223 is fixed, and upper surface of the stage 240 can be slide-moved back and forth (in the Y direction).

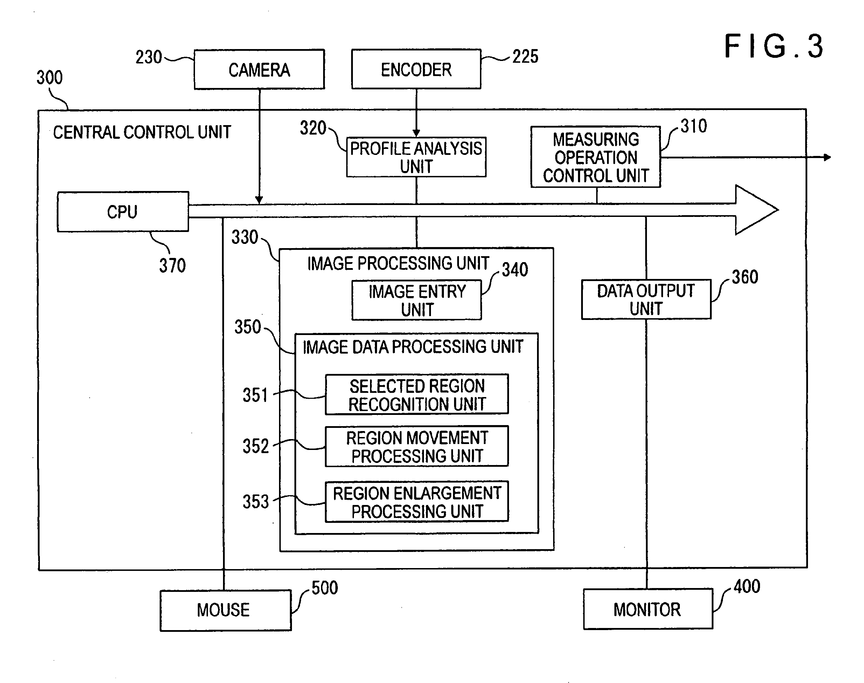

The probe 210 and the camera 230 are provided underneath of the Z-spindle 224. In other words, the base of the Z-spindle 224 serves as a probe mount. Each axis of the coordinate driving mechanism 220 has an encoder 225 (refer to FIG. 3) provided for detecting a driving amount.

The camera (i.e., image taking device) 230 is provided with an optical system (not shown).

The optical system includes an optical lens system such as an objective lens and an image taking system such as a CCD.

The camera 230 is provided underneath of the Z-spindle 224. The camera 230 is adjustable so as to be oriented in a direction in which the probe 210 enters the view field thereof, but the orientation of the camera has normally adjusted to be fixed in a direction in which the contact portion 212 of the probe 210 enters the view field thereof. The camera 230 employs an objective lens of a magnification which is low enough to easily capture the contact portion 212 of the probe 210 in the view field of the camera 230 without adjusting the orientation of the camera 230 or the position of the probe 210. The objective lens may have a magnification of, for example, 3 times to 20 times.

FIG. 3 is a diagram showing a configuration of a central control unit 300.

The central control unit 300 includes: a measuring operation control unit 310; a profile analysis unit 320; an image processing unit 330; a data output unit 360; and a central processing unit (CPU) 370. The measuring operation control unit 310 controls measuring operation through controlling the operation of the coordinate driving mechanism 220. The profile analysis unit 320 obtains by calculation a surface texture of an object to be measured, based on the result of detection made by the encoder 225. The image processing unit 330 performs image processing on the data on an image taken by the camera 230. The data output unit 360 performs output processing on the measured data and the image data. The central processing unit (CPU) 370 controls operation of the central control unit as a whole.

The measuring operation control unit 310 controls a driving amount of each of the bridge-type frame 221, the Z-column 223, and the Z-spindle 224 of the coordinate driving mechanism 220. To be specific, the measuring operation control unit 310 controls the operation of the coordinate driving mechanism 220 such that the object surface to be measured is scanned by the probe 210 with the probe 210 staying contact with the object surface to be measured. The measuring operation control unit 310 causes the encoder 225 to sample a displacement of the probe 210 at a predetermined sampling pitch. The result of the sampling is outputted to the profile analysis unit 320.

The profile analysis unit 320 obtains the surface profile of the object to be measured based on the displacement of the probe 210 detected by the encoder 225. The profile data thus obtained as to the object surface to be measured is displayed on the monitor 400 through the data output unit 360.

The image processing unit 330 includes: an image entry unit 340 for accepting entries of the data on the image taken by the camera 230 and buffering the data; and an image data processing unit 350 for processing the image data accepted by the image entry unit 340, in accordance with an instruction from the user.

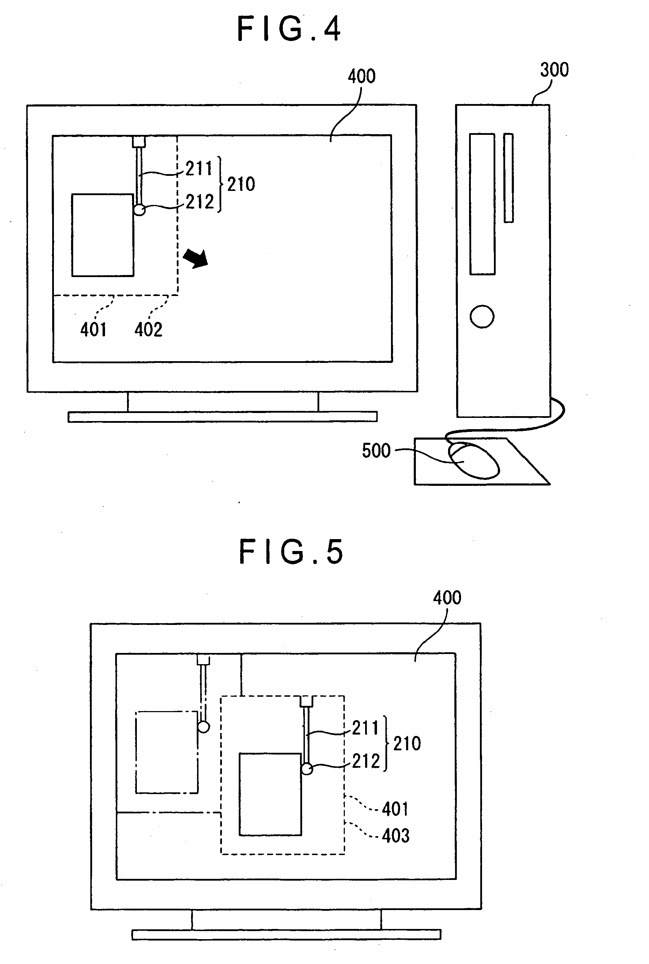

The image entry unit 340 stores an image signal sent from the camera 230. When the signal is a digital signal, the image entry unit 340 directly stores the signal as digital data. When the signal is an analog signal, the image entry unit 340 converts the signal to a digital signal and stores the digital signal as digital data. The image data processing unit 350 includes a selected region recognition unit 351, a region movement processing unit 352, a region enlargement processing unit 353. Operation of those units will be explained later with reference to examples of the monitor screen of FIGS. 4 to 7.

Here, the camera 230, the image processing unit 330, the monitor 400, and the mouse 500 constitute the probe observing device.

An operation of measuring an object to be measured by using the surface texture measuring device 100 having the above structure will be explained as follows.

First, an object to be measured is placed on the stage 240, and the contact portion 212 of the probe 210 is brought into contact with a measuring site of the object to be measured; the user adjusts the position of the probe 210 with reference to the display on the monitor 400 in bringing the contact portion 212 of the probe 210 to the measuring site.

The camera 230, which is fixed such that the contact portion 212 of the probe 210 enters the view field thereof, takes an image of the contact portion 212 of the probe 210.

The image data thus taken is entered to the image entry unit 340 and temporarily buffered as a digital image signal. Then, the image entry unit 340 outputs the image data through the data output unit 360 to the monitor 400, on which the contact portion 212 of the probe 210 is displayed.

At this time, the orientation of the camera 230 is fixed such that the contact portion 212 of the probe 210 enters the view field thereof, which does not necessarily mean that the contact portion 212 is in the center of the view field of the camera 230.

FIG. 4 is a diagram showing a state where an image of the contact portion 212 of the probe 210 taken by the camera 230 is displayed on the monitor 400.

As shown in FIG. 4, for example, there may be a case where the contact portion 212 of the probe 210 is located in the corner of the view field of the camera. In such the case, the user instructs data processing to be made such that the contact portion 212 of the probe 210 is displayed in substantially the center of the monitor screen.

In processing the image data, the user first selects the region the user desires to move to substantially the center of the screen. For example, as shown in FIG. 4, the user selects the region by using a mouse pointer on the display screen through controlling the mouse 500.

Once the region selecting operation is performed as described above, the selected region recognition unit 351 recognizes the selected region. The selected region recognition unit 351 extracts data corresponding to the selected region from the image data to put the extracted data into another frame, while drawing a box 402 enclosing the selected region 401 on the monitor.

Next, the user pulls the selected region 401 on the screen, so as to move the region to substantially the center of the monitor display screen, to substantially the center of the screen.

For example, the user drags the selected region 401 by using the mouse 500.

When the user performs operation of dragging the selected region 401 so as to move the selected region as described above, the region movement processing unit 352 moves the selected region 401 along with the dragging operation. The selected region 401 thus moved is displayed in a different window 403 in the center of the screen, as shown in FIG. 5. The contact portion of the probe 210 is displayed in the window 403, and the user brings the contact portion 212 to the measuring site with reference to the display screen in which the contact portion 212 of the probe 210 is displayed.

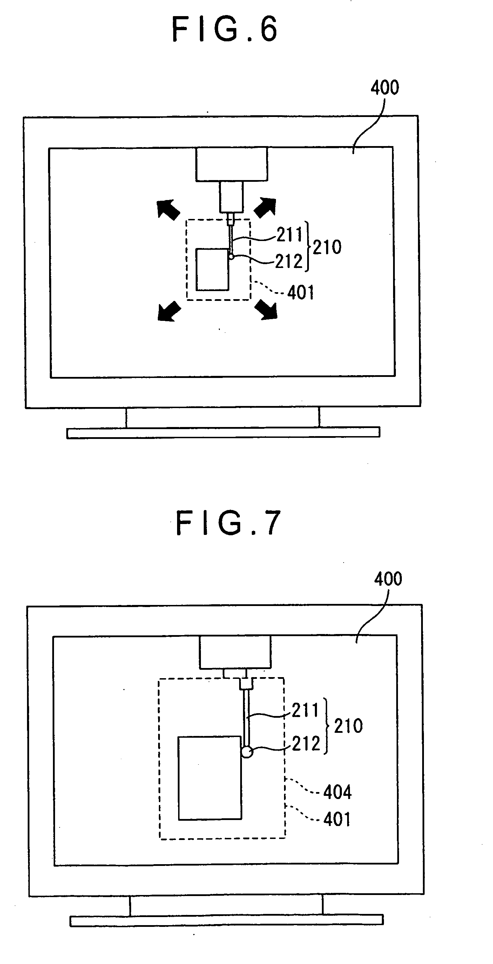

The camera 230 is equipped with the objective lens of a magnification which is low enough that the camera 230 can capture the contact portion 212 of the probe 210 in the view field without positional adjustment. Under the low magnification of the objective lens, the contact portion 212 of the probe 210 may not be enlarged to be sufficient enough for a visual check on the display screen. For example, as shown in Fig. 6, there may be a case where the contact portion 212 of the probe 210 is not enlarged sufficient enough.

In such the case, the user instructs the image data processing so that the contact portion 212 of the probe 210 is enlarged on the monitor screen. That is, the user selects a region to magnify by enclosing the region.

The selected region 401 is recognized by the selected region recognizing unit 351, and the user pulls (or drags) the corner of the selection are 401 so as to magnify the selected region 401 on the display screen. Once the operation of dragging the corner of the selected region 401 is performed as described above, the region enlargement processing unit 353 magnifies the selected region 401 along with the dragging operation. Then, the selected region 401 is enlarged and displayed in a different window 404, as shown in FIG. 7.

The user brings the contact portion 212 to the measuring site with reference to the window 404 in which the contact portion 212 of the probe 210 is enlarged.

When the contact portion 212 of the probe 210 is brought to the measuring site through the above-described operation, the measuring operation control unit 310 starts measuring operation. To be specific, the measuring operation control unit 310 controls the driving of the coordinate driving mechanism 220 such that the probe 212 scans the object surface to be measured with staying in contact with the object surface to be measured with a constant measuring force. A probe displacement at this time is detected by the encoder 225 provided to each axis of the coordinate driving mechanism 220. The detected value is analyzed by the profile analysis unit 320, and the result of the analysis is displayed on the monitor 400.

According to the present invention as defined in claim 1, the following effects are produced.
(1) The image data processing unit 350 is capable of processing the image data taken by the camera 230, and an image of the probe 210, for example, is processed to be enlarged, which makes it possible to clearly display an image of the probe 210 on the monitor 400. Therefore, the user can clearly observe the probe 210 with reference to the display on the monitor 400, and can bring the probe 210 to the measuring point with accuracy.
(2) The display on the monitor 400 can be adjusted through image processing performed by the image data processing unit 350 so as to, for example, magnify the probe 210 to be displayed. Therefore, the camera itself only needs to be provided with a lens system of a low magnification. The wider view field of the camera is obtained with the low-magnification lens system, which makes it easy to bring the probe 210 into a view field of the camera.
   Therefore, there is no need to make a fine adjustment to the positional relationship between the probe 210 and the camera 230 such that the probe 210 enters the view field of the camera 230. Accordingly, the operation is simplified to save work in the measurement, leading to an increase in measuring efficiency.
(3) It is possible to display the probe 210 in the center of the display screen through input operation of the mouse 500 for inputting the movement instruction. At this time, a mere operation through the mouse 500 is necessary, and there is no need to make an adjustment to the positional relationship between the probe 210 and the camera 230 such that the probe 210 actually comes into the center of the view field of the camera 230. Accordingly, it is possible to save work in the measurement to thereby increase measuring efficiency.
(4) It is possible to magnify the probe 210 to be displayed on the monitor 400 by inputting an enlargement instruction through the mouse 500. Accordingly, the lens system provided to the camera itself may be of a low magnification. The wider view field of the camera 230 is obtained with the low magnification of the lens system, which makes it easy to bring the probe 210 into the view field. Further, with the wider view field, it is possible to bring the probe 210 into the view field by merely fixing the camera toward the probe 210, and there is no need to make a fine adjustment to the positional relationship between the probe 210 and the camera 230. Therefore, work in the measurement can be saved to thereby increase measuring efficiency.

It should be noted that the present invention is not limited to the foregoing embodiment, and any modification or improvement made within a scope of the present invention is encompassed by the present invention as defined in the appended claims.

The probe 210 only needs to have a configuration capable of detecting the object surface to be measured through contacting with or in the proximity of the measuring point of the object to be measured. For example, the probe 210 is not limited to a vibration touch probe, and may also be a scanning probe for performing scanning measurement by holding the stylus 211 in such a manner that the stylus can be three-dimensionally least displaceable, while keeping the least displacement of the stylus 211 constant to thereby maintain the measuring force constant. Alternatively, the probe 210 may be a non-contact probe for detecting the object surface to be measured without contacting therewith. Examples of the non-contact probe include a cantilever for detecting a tunnel current used in an atomic force microscope (AFM), and an electrostatic capacitance probe.

The image data processing include geometrical processing such as moving, scaling, rotation, a distortion correction. Further, it is also possible to assume such functions as a contrast adjustment function, a sharping function, and filtering function such as an edge extraction.

There has been explained the case of displaying the contact portion 212 of the probe 210 in the center of the screen, by taking an example where the region is first selected through operation of the mouse and the selected region is then dragged to a predetermined position. Alternatively, for example, the user may bring a mouse pointer to the contact portion 212 of the probe 210 displayed on the screen so as to indicate the contact portion 212 of the probe 210 and click the mouse, so that the image processing unit 330 may automatically recognize the position of the probe contact portion 212 on the display screen to move the region of a predetermined area to substantially the center of the monitor screen.

In the above embodiment, there has been explained a case where the user selects the region and gives an enlargement instruction to thereby magnify the measuring point for display. However, according to the invention, the coordinate of the measuring point is inputted in advance, and the measuring point is automatically enlarged when the probe comes close to the measuring point.

The mouse 500 is used as an example of an operating device and an explanation has been made thereon. Such the operating device may be a keyboard, or anything that is capable of inputting an image processing instruction to the image data processing unit. With the keyboard, the selected region or the movement destination of the selected region may be designated through input of the coordinate values, and a magnification of the selected region may be instructed by numeric values through input of numbers.

The magnification of the lens system of the camera (i.e., the image taking device) may be variable.

The camera may be provided to the bridge-type frame or on the stage.

Further, in the above embodiment, there has been explained a case where the camera is fixed. Alternatively, the camera may be capable of being moved by a three-axis-orthogonal driving mechanism in the directions of three orthogonal axes, namely, an X-axis, a Y-axis, and a Z-axis.

Also, a cursor (for example, a cross cursor) may be displayed on the monitor.

Further, the cursor is used as reference to adjust a posture (such as a vertical posture or a horizontal posture) of the probe.

Further, the monitor may be provided to a position apart from the measuring device main body, and the measuring device main body may be made remotely controllable to perform remote measurement.

## Claims

1. A probe observing device for taking an image of a probe (210) provided to a measuring device main body (200) and for displaying the image of the probe, the measuring device main body detecting a surface of the object to be measured by using the probe (210) to measure a surface texture of the object surface to be measured, the probe observing device comprising:
an image taking device (230) for taking an image of the probe (210);
an image processing unit (330) for processing image data on the image taken by the image taking device (230);
a display (400) for displaying the image data processed by the image processing unit (330); and
**characterized by**
an operating device (500) for inputting, through manual operation, an instruction for image processing to be performed by the image processing unit (330), wherein:
the image processing unit (330) comprises an image data processing unit (350) for processing image data in accordance with one of the instruction inputted by the operating device (500) and an instruction inputted from a measuring part program, so that
the image of the probe is capable of being processed through one of the instruction inputted by the operating device (500) and the instruction inputted from the measuring part program, and wherein
the image data processing unit (350) further comprises:
a selected region recognition unit (351) for recognizing a region including a measuring point set in advance and the probe, and for extracting data corresponding to the region such recognized from the image data; and
a region enlargement processing unit (353) for magnifying the region extracted by the selected region recognition unit (351) at a predetermined
magnification on the display screen of the display (400) in accordance with the distance between the measuring point set in advance and the probe (210).

2. A probe observing device according to claim 1, wherein the image taking device (230) comprises a lens system for magnifying the image of the probe (210) at a magnification of 100 times or less.

3. A probe observing device according to claim 1 or 2, further comprising a three-axis-orthogonal driving mechanism (220) for driving the image taking device (230) in the directions of three axes of an X-axis, a Y-axis, and a Z-axis, the three axes being orthogonal to one another.

4. A probe observing device according to claim 1 or 2, wherein the image taking device (230) is provided to be fixed in position with respect to the probe (210) such that the probe (210) enters a view field of the image taking device.

5. A probe observing device according to any one of claims 1 to 4, wherein:
the operating device (500) is further capable of inputting: a region selection instruction for selecting, as a selected region, a predetermined region on a display screen of the display (400); and a movement instruction for moving the selected region to a predetermined position on the display screen of the display (400); and
the selected region recognition unit (351) is further suitable for recognizing the selected region selected based on the region selection instruction and extracting data corresponding to the selected region from the image data; and
the image data processing unit (350) further comprises a region movement processing unit (352) for moving the selected region to a position as instructed by the movement instruction on the display screen of the display.

6. A probe observing device according to any one of claims 1 to 5, wherein:
the operating device (500) is capable of inputting: a region selection instruction for selecting, as a selected region, a predetermined region on a display screen of the display (400); and a magnification instruction for magnifying the selected region to a predetermined size on the display screen of the display (400); and
the selected region recognition unit (351) is further suitable for recognizing the selected region selected by the operating device (500) and extracting data corresponding to the selected region from the image data; and
the region enlargement processing unit (353) is further suitable for magnifying the selected region to a size instructed by the magnification instruction on the display screen of the display.

7. A surface texture measuring device (100), comprising:
the probe observing device according to any one of claims 1 to 6; and
a measuring device main body (200) having a probe.

## Patentansprüche

1. Ein Taststift-Beobachtungsgerät zum Aufnehmen eines Bildes eines Taststifts (210), welches einem Messgeräthauptkörper (200) zur Verfügung gestellt wird, und zum Anzeigen des Bildes des Taststifts, wobei der Messgeräthauptkörper eine Oberfläche des zu messenden Gegenstandes erfasst unter Verwendung des Taststifts (210), um eine Oberflächentextur der Oberfläche des zu messenden Gegenstandes zu messen, wobei das Taststift-Beobachtungsgerät umfasst:
ein Bildaufnahmegerät (230) zum Aufnehmen eines Bildes des Taststifts (210);
eine Bildverarbeitungseinheit (330) zum Verarbeiten der Bilddaten auf dem Bild, welches durch das Bildaufnahmegerät (230) aufgenommen wurde;
eine Anzeige (400) zum Anzeigen der Bilddaten, die durch die Bildverarbeitungseinheit (330) verarbeitet wurden; und
**gekennzeichnet durch**
eine Betriebsvorrichtung (500) zum manuellen Eingeben einer Instruktion zum Bildverarbeiten, welche **durch** die Bildverarbeitungseinheit (330) durchgeführt werden soll, wobei:
die Bildverarbeitungseinheit (330) eine Bilddatenverarbeitungseinheit (350) zum Verarbeiten von Bilddaten in Übereinstimmung mit entweder der Instruktion, die **durch** die Betriebsvorrichtung (500) eingegeben wurde, oder **durch** eine Instruktion, die von einem Messteilprogramm eingegeben wurde, umfasst,
so dass das Bild des Taststifts geeignet ist, um **durch** entweder die Instruktion, die **durch** die Betriebsvorrichtung (500) eingegeben wurde, oder die Instruktion, die **durch** das Messteilprogramm eingegeben wurde, verarbeitet zu werden, und wobei die Bilddatenverarbeitungseinheit (350) weiterhin umfasst:
eine Auswahlbereichserkennungseinheit (351) zum Erkennen eines Bereichs einschließlich eines im Voraus eingestellten Messpunkts und des Taststifts, und zum Auswählen der Daten, die dem so von den Bilddaten erkannten Bereich entsprechen; und
eine Bereichsvergrößerungsverarbeitungseinheit (353) zum Vergrößern des Bereichs, der **durch** die Auswahlbereichserkennungseinheit (351) bei einer vorbestimmten Vergrößerung auf dem Anzeigebildschirm der Anzeige (400) in Übereinstimmung mit dem Abstand zwischen dem im voraus bestimmten Messpunkt und dem Taststift (210) ausgewählt wurde.

2. Taststift-Beobachtungsgerät nach Anspruch 1, in welchem das Bildaufnahmegerät (230) ein Linsensystem zum Vergrößern des Bildes des Taststifts (210) auf eine Vergrößerung von 100-fach oder weniger umfasst.

3. Taststift-Beobachtungsgerät nach Anspruch 1 oder 2, weiterhin einen Dreiachsenorthogonal-Antriebsmechanismus (220) umfassend zum Antreiben des Bildaufnahmegeräts (230) in den Richtungen von drei Achsen aus einer X-Achse, eine Y-Achse und einer Z-Achse, wobei die drei Achsen zueinander orthogonal sind.

4. Taststift-Beobachtungsgerät nach Anspruch 1 oder 2, in welchem das Bildaufnahmegerät (230) vorgesehen ist, um in einer Position in Bezug auf den Taststift (210) fixiert zu sein, so dass der Taststift (210) in ein Sichtfeld des Bildaufnahmegeräts hineinreicht.

5. Taststift-Beobachtungsgerät nach irgendeinem der Ansprüche 1 bis 4, in welchem:
das Betriebsgerät (500) weiterhin eingeben kann: eine Bereichsauswahlinstruktion zum Auswählen eines vorbestimmten Bereichs auf einem Anzeigebildschirm der Anzeige (400) als ein Auswahlbereich;
und eine Bewegungsinstruktion zum Bewegen des Auswahlbereichs in eine vorbestimmte Position auf dem Anzeigebildschirm der Anzeige (400); und
die Auswahlbereichserfassungseinheit (351) weiterhin geeignet ist zum Erfassen des Auswahlbereichs, der aufgrund der Auswahlbereichsinstruktion ausgewählt ist, und zum Entnehmen von Daten,
die dem Auswahlbereich der Bilddaten entsprechen; und
die Bilddatenverarbeitungseinheit (350) weiterhin umfasst:
eine Bereichsbewegungsverarbeitungseinheit (352) zum Bewegen des Auswahlbereichs in eine Position gemäß der Bewegungsinstruktion auf dem Anzeigebildschirm der Anzeige.

6. Taststift-Beobachtungsgerät nach irgendeinem der Ansprüche 1 bis 5, in welchem:
das Betriebsgerät (500) eingeben kann: eine Bereichsauswahlinstruktion zum Auswählen eines vorbestimmten Bereichs auf einem Anzeigebildschirm der Anzeige (400) als ein Auswahlbereich; und
eine Vergrößerungsinstruktion zum Vergrößern des Auswahlbereichs auf eine vorbestimmte Größe auf dem Anzeigebildschirm der Anzeige (400); und
die Auswahlbereichseufassungseinheit (351) weiterhin geeignet ist zum Erfassen des Auswahlbereichs, der durch das Betriebsgerät (500) ausgewählt wurde, und zum Entnehmen der Daten, die dem Auswahlbereich aus den Bilddaten entsprechen; und
die Bereichsvergrößerungsverarbeitungseinheit (353) weiterhin geeignet ist zum Vergrößern des Auswahlbereichs auf eine Größe, wie durch die Vergrößerungsinstruktion auf dem Anzeigebildschirm der Anzeige instruiert.

7. Ein Oberflächentextur-Messgerät (100) umfassend:
das Taststift-Beobachtungsgerät nach irgendeinem der Ansprüche 1 bis 6; und
einen Messgeräthauptkörper (200) mit einem Taststift.

## Revendications

1. Un dispositif d'observation d'un palpeur pour prendre une image d'un palpeur (210) disposé sur un corps principal de dispositif de mesure (200) et pour afficher l'image du palpeur, le corps principal du dispositif de mesure détectant une surface de l'objet à mesurer en utilisant le palpeur (210) pour mesurer une texture de surface de la surface de l'objet à mesurer, le dispositif d'observation de palpeur comprenant :
un dispositif de prise d'image (230) pour prendre une image du palpeur (210) ;
une unité de traitement d'image (330) pour traiter des données d'image sur l'image prise par le dispositif de prise d'image (230) ;
un afficheur (400) pour afficher les données d'image traitées par l'unité de traitement d'image (330) ; et
**caractérisé par**
un dispositif d'actionnement (500) pour introduire, par une opération manuelle, une instruction pour le traitement d'image à effectuer par l'unité de traitement d'image (330), dans lequel :
l'unité de traitement d'image (330) comprend une unité de traitement de données d'image (350) pour traiter des données d'image conformément à l'une de l'instruction introduite par le dispositif d'actionnement (500) et d'une instruction introduite depuis un programme de mesure de pièce, de sorte que l'image du palpeur puisse être traitée par l'intermédiaire d'une de l'instruction introduite par le dispositif d'actionnement (500) et
de l'instruction introduite à partir du programme de mesure de pièce, et dans lequel
l'unité de traitement de données d'image (350) comprend en outre :
une unité de reconnaissance de région sélectionnée (351) pour reconnaître une région comprenant un point de mesure déterminé à l'avance et le palpeur, et pour extraire des données correspondant à la région ainsi reconnue à partir des données d'image ; et
une unité de traitement d'agrandissement de région (353) pour grossir la région extraite par l'unité de reconnaissance de région sélectionnée (351) avec un grossissement prédéterminé sur l'écran d'affichage de l'afficheur (400) en fonction de la distance entre le point de mesure déterminé à l'avance et le palpeur (210).

2. Un dispositif d'observation de palpeur selon la revendication 1, dans lequel le dispositif de prise d'image (230) comprend un système de focalisation pour grossir l'image du palpeur (210) à un grossissement de 100 fois ou plus.

3. Un dispositif d'observation de palpeur selon la revendication 1 ou 2, comprenant en outre un mécanisme d'entraînement à trois axes orthogonaux (220) pour entraîner le dispositif de prise d'image (230) dans les directions de trois axes d'un axe X, d'un axe Y et d'un axe Z, les trois axes étant orthogonaux entre eux.

4. Un dispositif d'observation de palpeur selon la revendication 1 ou 2, dans lequel le dispositif de prise d'image (230) est prévu pour être fixé en position par rapport au palpeur (210) de sorte que le palpeur (210) entre dans un champ de vision du dispositif de prise d'image.

5. Un dispositif d'observation de palpeur selon l'une des revendications 1 à 4, dans lequel :
le dispositif d'actionnement (500) est en outre capable d'introduire : une instruction de sélection de région pour sélectionner, en tant que région sélectionnée, une région prédéterminée sur un écran d'affichage de l'afficheur (400) ; et
une instruction de déplacement pour déplacer la région sélectionnée vers une position prédéterminée sur l'écran d'affichage de l'afficheur (400) ; et
l'unité de reconnaissance de région sélectionnée (351) est en outre propre à reconnaître la région sélectionnée sur la base de l'instruction de sélection de région et extraire les données correspondant à la région sélectionnée à partir des données d'image ; et
l'unité de traitement de données d'image (350) comprend en outre :
une unité de traitement de déplacement de région (352) pour déplacer la région sélectionnée vers une position telle que prévue par l'instruction de mouvement sur l'écran d'affichage de l'afficheur.

6. Un dispositif d'observation de palpeur selon l'une des revendications 1 à 5, dans lequel :
le dispositif d'actionnement (500) est capable d'introduire : une instruction de sélection de région pour sélectionner, en tant que région sélectionnée, une région prédéterminée sur un écran d'affichage de l'afficheur (400) ; et une instruction de grossissement pour grossir la région sélectionnée à une dimension prédéterminée sur l'écran d'affichage de l'afficheur (400) ; et
l'unité de reconnaissance de région sélectionnée est en outre propre à reconnaître la région sélectionnée qui a été sélectionnée par le dispositif d'actionnement (500) et extraire des données correspondant à la région sélectionnée à partir des données d'image ; et
l'unité de traitement d'agrandissement de région (353) est en outre propre à grossir la région sélectionnée à une dimension prescrite par l'instruction de grossissement sur l'écran d'affichage de l'afficheur.

7. Un dispositif de mesure de texture de surface (100), comprenant :
le dispositif d'observation de palpeur selon l'une des revendications 1 à 6 ; et
un corps principal de dispositif de mesure (200) possédant un palpeur.
